# FASCICULE DE BREVET EUROPEEN

(11) **EP 1 632 840 B1**
(45) Date de publication et mention de la délivrance du brevet: **23.01.2008**
(21) Numéro de dépôt: 05291795.2
(22) Date de dépôt: 29.08.2005
(51) Int. Cl.: G06F 3/033, B01L 3/02

(54) **Pipette comportant une roue de commande**
Pipette mit einem Funktionsrad
Pipette with a scroller

(30) Priorité: 07.09.2004 FR 0409443
(43) Date de publication de la demande: 08.03.2006
(73) Titulaire: GILSON SAS, 95400 Villiers-le-Bel (FR)
(72) Inventeur: Haddad, Patrick, 95230 Soisy sous Montmorency (FR); Langlais, Christian, 95460 Ezanville (FR); Solotareff, Stéphane, 95420 WY dit Joli Village (FR)
(74) Mandataire: Poulin, Gérard

(56) Documents cités:
- EP-A- 0 864 364
- WO-A-02/00346
- US-A- 4 671 123

## Description

L'invention concerne les pipettes.

Il est connu de prévoir sur les pipettes motorisées ou les pipettes à actionnement manuel des organes de commande de la pipette sous la forme de boutons, roues, molettes, etc. Le document WO 01/67748 au nom de la demanderesse divulgue par exemple une pipette à actionnement manuel comprenant une molette de réglage mobile à rotation dans le corps de la pipette pour régler le volume de liquide à prélever. Cette molette est par ailleurs mobile à coulissement suivant une direction perpendiculaire à l'axe de rotation pour faire passer la molette d'une position verrouillée à une position déverrouillée. En position verrouillée, la rotation de la molette, par exemple accidentelle ou intempestive, n'entraîne pas de déréglage du volume.

Un but de l'invention est de fournir une pipette ayant une ergonomie encore améliorée.

A cet effet, on prévoit sur l'invention une pipette comportant une roue de commande mobile à rotation et mobile à coulissement, la pipette étant agencée de sorte qu'un coulissement de la roue engendre une commande de la pipette.

La pipette selon l'invention pourra présenter en outre au moins l'une quelconque des caractéristiques suivantes :
- la roue s'étend en saillie d'un corps de la pipette,
- la pipette comprend des moyens de rappel de la roue à l'encontre de son coulissement à partir d'une position nominale,
- elle comprend des moyens pour convertir un mouvement de la roue en au moins un signal électrique,
- elle comprend des moyens pour convertir un mouvement de la roue en au moins deux signaux électriques permettant de déterminer un sens du mouvement,
- elle est agencée pour permettre une navigation au moyen de la roue dans au moins un menu,
- elle est agencée pour permettre de régler au moyen de la roue au moins un paramètre, et de préférence au moins deux paramètres,
- elle comprend des moyens pour déterminer une vitesse de rotation de la roue et des moyens pour choisir une correspondance entre un secteur angulaire de la roue et une unité de valeur d'un paramètre,
- elle est agencée pour permettre de régler au moyen de la roue au moins un volume à prélever,
- elle est agencée pour permettre de régler au moyen de la roue au moins une valeur de calibration de la pipette,
- elle est agencée pour permettre de régler au moyen de la roue un nombre de cycles de prélèvement précédant l'émission d'un signal par la pipette, et
- elle est agencée pour permettre d'entrer dans la pipette au moyen de la roue des mots, des chiffres, ou des expressions alphanumériques.

On prévoit également selon l'invention un procédé de commande d'une pipette, dans lequel on commande la pipette en faisant coulisser une roue mobile à rotation.

Le procédé selon l'invention pourra présenter en outre au moins l'une quelconque des caractéristiques suivantes :
- on fait coulisser la roue pour activer un mode de réglage d'un paramètre,
- on fait tourner la roue pour sélectionner une valeur d'un paramètre,
- on fait coulisser la roue pour valider une valeur d'un paramètre sélectionné,
- durant une manoeuvre de la roue, on détermine une vitesse de rotation de la roue ; et on choisit une correspondance entre un secteur angulaire de la roue et une unité de valeur du paramètre.

D'autres caractéristiques et avantages de l'invention apparaîtront encore dans la description suivante d'un mode préféré de réalisation et d'une variante donnés à titre d'exemples non limitatifs en référence aux dessins annexés sur lesquels :
- la figure 1 est une vue en perspective d'une pipette selon un mode préféré de réalisation de l'invention ;
- les figures 2 et 3 sont deux vues en coupe axiale de la pipette de la figure 1 illustrant respectivement ses parties haute et basse ;
- la figure 4 est une vue en perspective éclatée de la partie haute de la pipette de la figure 1 ;
- la figure 5 est une vue à plus grande échelle d'un détail de la figure 1 ;
- la figure 6 est une vue en perspective éclatée de la partie haute de la pipette illustrée à la figure 5 ;
- la figure 7 est une vue schématique illustrant le montage de la molette de la pipette de la figure 1 ;
- la figure 8 illustre l'encodage de signaux résultant du mouvement de la molette ;
- la figure 9 est constituée de deux tableaux montrant l'analyse des signaux de la figure 8 ; et
- la figure 10 est une vue en perspective d'une variante de réalisation de la pipette.

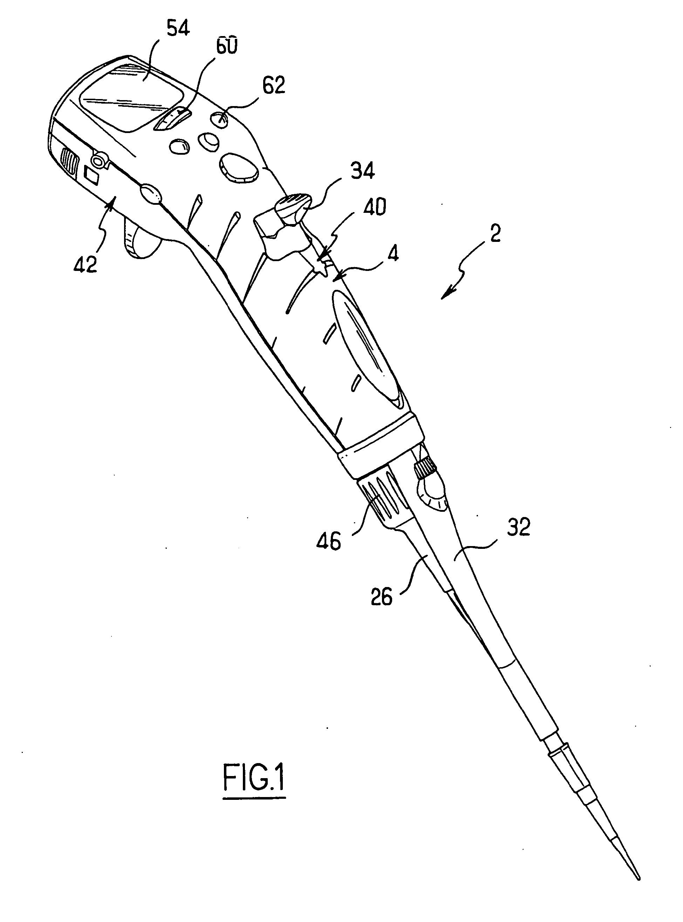

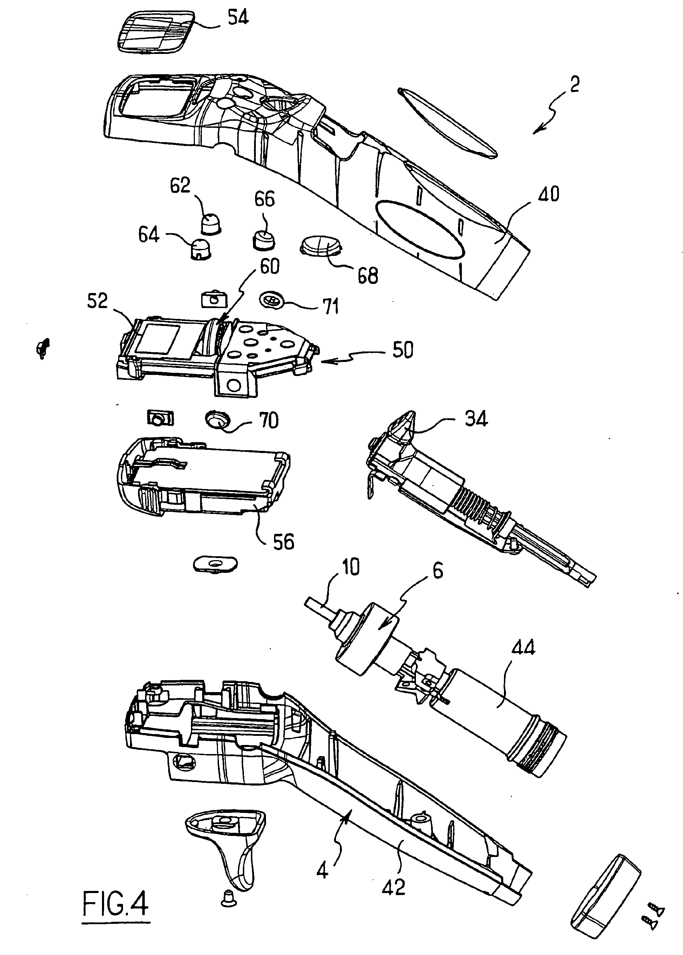

On a illustré aux figures 1 à 9 un mode préféré de réalisation de la pipette selon l'invention.

La pipette 2 comprend un corps ou châssis 4. Il s'agit en l'espèce d'une pipette motorisée de sorte que le prélèvement et le refoulement du liquide est effectué sous l'action d'un moteur.

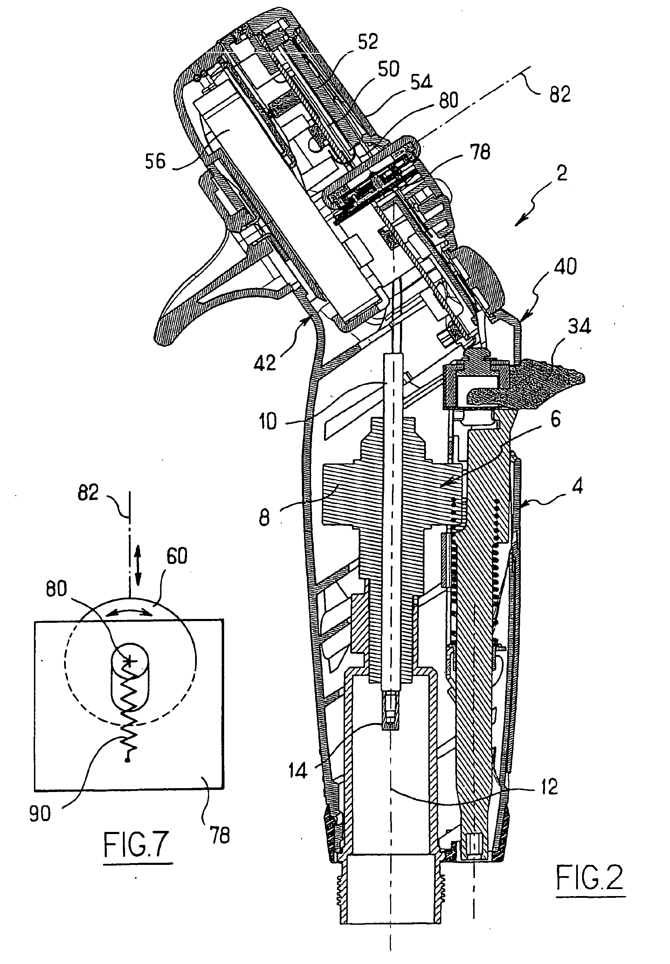

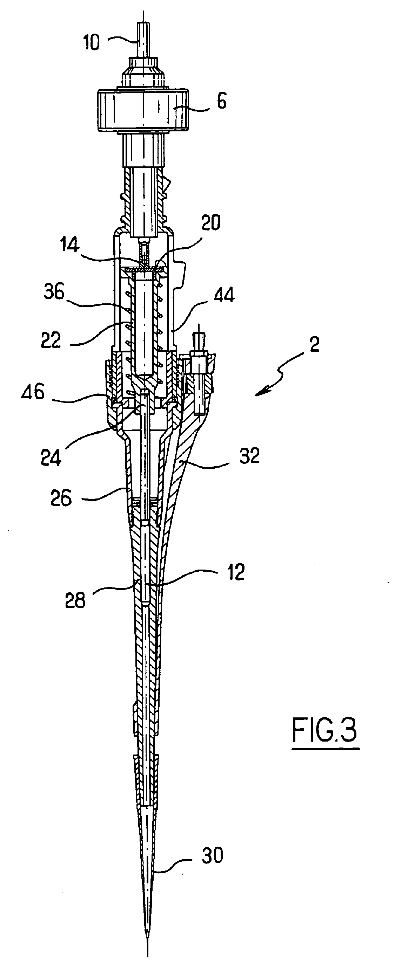

Comme illustré aux figures 2 et 3, la pipette comprend un moteur 6 comprenant un boîtier 8 et une tige 10 s'étendant suivant un axe longitudinal 12 de la pipette. Le moteur est apte à faire coulisser la tige 10 vers le haut ou vers le bas suivant la direction 12.

A une extrémité inférieure de la tige 10 est fixée une pièce de prolongation ou touche 14, qui est en l'espèce vissée sur l'extrémité de la tige. La touche est en appui suivant l'axe 12 sur un insert 20 logé dans une extrémité supérieure d'un support de piston 22. Ce dernier reçoit dans une extrémité inférieure un piston 24. L'ensemble formé par la tige 10, la touche 14, l'insert 20, le support de piston 22 et le piston 24 forme un équipage mobile à coulissement suivant la direction 12.

La pipette comprend un ressort 36 dont une extrémité supérieure est en appui contre une extrémité supérieure du support de piston 22 et une extrémité inférieure est en appui sur le corps 4 de façon à solliciter le support 22 ainsi que le piston 24 vers le haut et maintenir l'insert 20 en contact avec la touche 14.

Lorsque le ressort commande la descente de la tige 10, l'appui de la touche 14 sur l'insert 20 provoque la descente du piston le long de l'axe 12. Lorsque le moteur fait remonter la tige 10, le piston suit le mouvement inverse sous l'effet de rappel du ressort 36.

La pipette comprend un embout inférieur en deux portions, respectivement une portion supérieure 26 et une portion inférieure 28. La portion inférieure 28 est rapportée par vissage dans la portion supérieure 26 avec l'interposition d'un joint d'étanchéité en contact avec la face cylindrique externe du piston. A une extrémité inférieure de la portion 28 peut être fixé un cône jetable destiné à recevoir le liquide à prélever. La pipette comprend un bras 32 permettant d'éjecter le cône lorsque celui-ci doit être remplacé par un cône propre. Le bras 32 est commandé par l'utilisateur au moyen d'un bouton 34 fixé au corps 4.

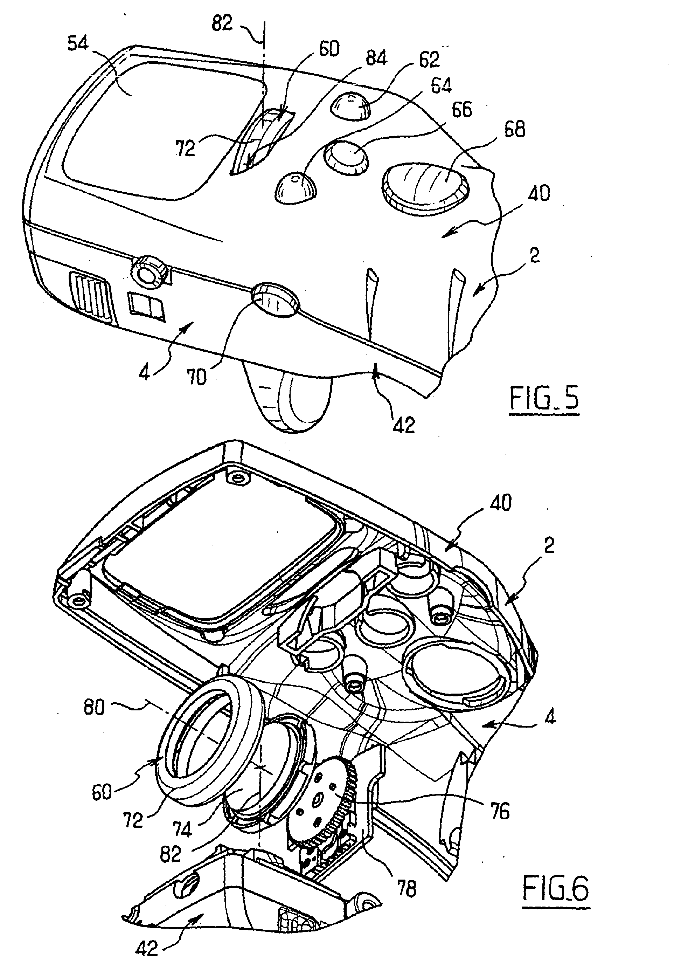

Comme on le voit notamment sur la figure 5, le corps 4 comprend notamment une demi-coque avant 40 et une demi-coque arrière 42 formant un boîtier de réception des organes dans la partie haute de la pipette. Cette partie a été illustrée à la figure 2 et comprend en particulier le moteur avec la tige. La partie basse de la pipette (illustrée ainsi que le moteur et d'autres pièces à la figure 3) est amovible et peut être démontée de la partie haute pour associer à cette dernière une partie basse différente, par exemple présentant un volume de prélèvement de capacité différente. Pour cela, le corps 4 comprend un fourreau 44 présentant à son extrémité inférieure un filet pour la réception par vissage d'un écrou 46 permettant le maintien de la partie basse par l'intermédiaire de la portion haute 26 de l'embout.

La pipette comprend une unité de commande électronique 50 sous la forme d'une carte électronique comprenant notamment un microprocesseur et un écran 52 visible à travers une fenêtre 54 de la demi-coque supérieure 40. La pipette comprend une batterie 56 pour l'alimentation en énergie de la carte 50 et du moteur 6.

La pipette comprend différents organes de commande permettant à l'utilisateur de commander le fonctionnement de la pipette, comme on le verra plus loin. Ces organes comprennent notamment une roue 60 sous la forme d'une molette, ainsi que des boutons 62, 64, 66, 68, ces cinq boutons s'étendant sur la face avant de la demi-coque avant. La molette comprend également deux boutons latéraux 70, 71. Ces boutons s'étendent à la jonction des coques avant et arrière.

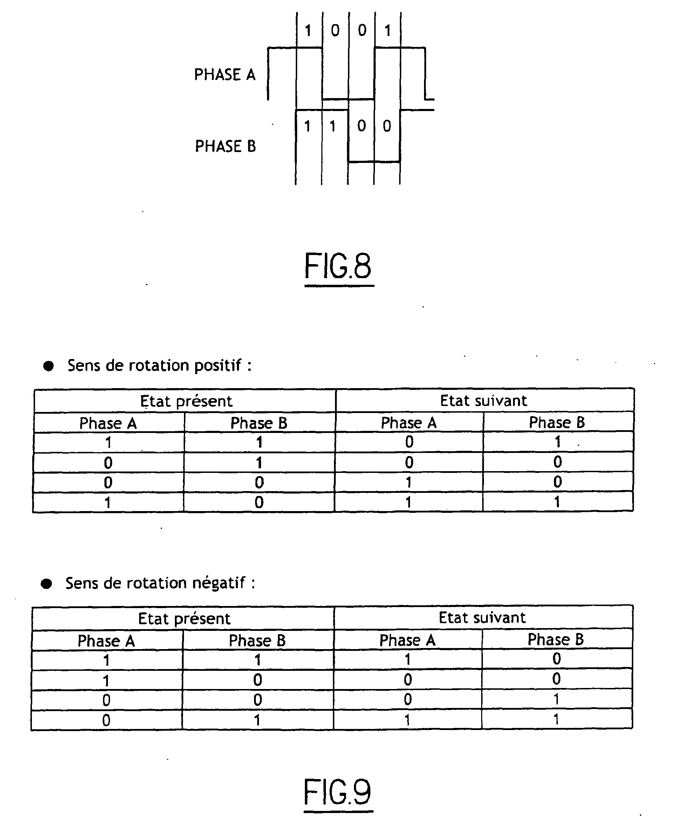

La roue 60 a été illustrée en vue éclatée sur la figure 6. Elle comprend une bague 72 en élastomère rapportée sur un support 74 monté sur un disque rotatif 76, lui-même reçu sur une carte 78. Comme illustré de façon schématique à la figure 7, la molette 60 est montée sur la carte 78 de façon à être mobile à rotation autour d'un axe 80 parallèle au plan de la fenêtre 54 et formant un angle aigu avec l'axe 32 qu'il intercepte. La molette 60 est également montée mobile à coulissement par rapport à la carte 78 suivant une direction 82 perpendiculaire à l'axe 80 et au plan général de la fenêtre 54.

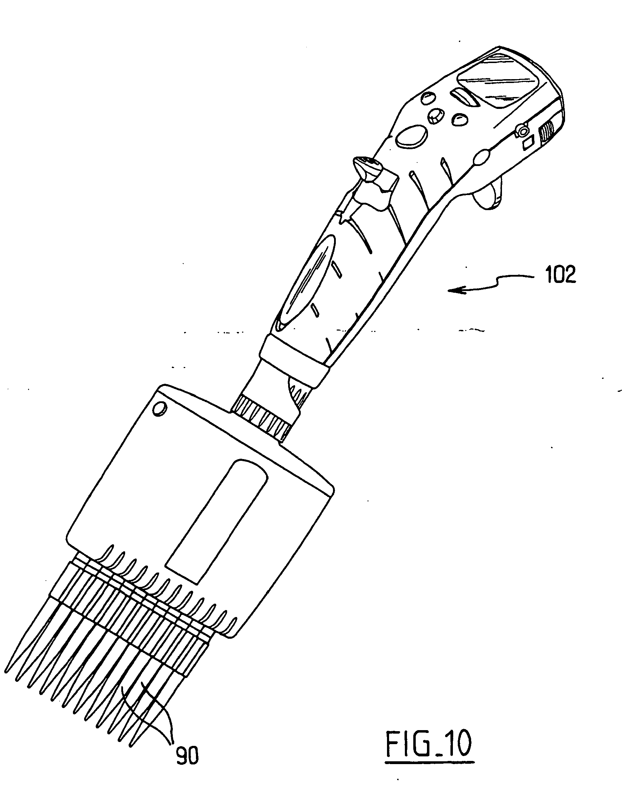

La molette 60 est positionnée dans la partie haute de sorte qu'elle s'étend partiellement en saillie radiale d'une ouverture 84 formée dans la coque sous la fenêtre 54. Cet agencement permet à l'utilisateur de manoeuvrer la molette aussi bien à coulissement que à rotation directement depuis l'extérieur de la pipette. La roue 76 constitue une roue codeuse portant une photodiode. A la carte 78 est fixé un photodétecteur apte à détecter les mouvements à coulissement et à rotation de la roue et à les transmettre à la carte 50. La molette 60 et la carte 78 sont agencées de sorte que la rotation de la molette est apte à générer simultanément deux signaux identiques en créneaux, mais en décalage de phase d'un quart de période l'un par rapport à l'autre comme illustré à la figure 8. Chaque signal se compose au cours d'une succession de deux 1 puis de deux 0. Comme illustré dans les tableaux de la figure 9, ce décalage des signaux permet à la carte 50 de déterminer à partir d'une position de départ quelconque de la molette son sens de rotation par analyse de chaque signal à partir de cette position.

La carte 78 détecte également un mouvement de coulissement de la molette produit par l'utilisateur. Ce coulissement tend à enfoncer la molette à l'intérieur de la partie haute, la molette étant immédiatement rappelée dans sa position d'origine par un ressort de rappel 90. Ce coulissement suivi immédiatement d'un coulissement en sens inverse constitue une impulsion ou un clic.

La pipette a été préprogrammée pour remplir un certain nombre de fonctions. Parmi celles-ci, certaines font intervenir les boutons précités ainsi que la molette 60.

De façon générale, l'utilisateur peut commander la pipette d'une part par un clic en engendrant le coulissement de la molette, et d'autre part par une mise en rotation de la molette antérieure ou postérieure au clic. La molette permet notamment la navigation dans des menus du logiciel apparaissant sur l'écran 52. Elle permet également de régler les valeurs de différents paramètres comme on va le voir.

La pipette est programmée pour mesurer une vitesse de rotation de la molette lorsque celle-ci est manoeuvrée par l'utilisateur. Précisément, la molette comprend un nombre prédéterminé de pas qui correspondent chacun à une mesure angulaire d'une fraction de la molette. Le franchissement de chacun de ces pas est ressenti par l'utilisateur lors de la rotation de la molette. Un tel agencement est classique dans une roue de commande. Lors de la rotation de la molette, le processeur mesure la période de temps s'écoulant entre deux pas successifs. En fonction de cette mesure, la correspondance entre un pas de la molette et le nombre d'incréments du paramètre dont la valeur est modifiée par le mouvement de la molette est éventuellement changée.

Dans le présent exemple, si la période est inférieure à 15 millisecondes, le processeur décidera qu'un pas correspond à cent incréments. Si la période est comprise entre 15 et 25 millisecondes, le processeur décidera qu'un pas correspond à dix incréments. Enfin, si cette période est supérieure à 25 millisecondes, un pas correspondra à un incrément. Par conséquent, le processeur adapte la vitesse de défilement du paramètre en fonction de la vitesse de rotation de la molette par l'utilisateur. En d'autres termes, si la molette est manoeuvrée très rapidement en rotation, le processeur commandera une variation du paramètre particulièrement rapide. A l'inverse, si la rotation de la molette est lente, le processeur commandera une variation du paramètre particulièrement lente. On a présenté dans le présent exemple trois valeurs d'incréments associés à deux valeurs de seuil. Il va de soi que le nombre d'incréments et de seuils peut être modifié. On pourra par exemple se contenter d'une seule valeur de seuil. De même, la valeur des seuils des incréments pourra elle aussi être modifiée.

Nous allons maintenant décrire les manoeuvres effectuées par l'utilisateur pour effectuer certaines commandes de la pipette. La pipette est programmée afin que ces manoeuvres soient exécutées sous l'effet de ces commandes. Cette programmation ressortira donc de l'exposé des commandes et de leurs effets qui va suivre.

### Réglage du volume à prélever.

Pour régler le volume à prélever, l'utilisateur clique sur la molette (c'est-à-dire la fait coulisser) puis fait tourner la molette pour choisir une des valeurs du volume qui s'affiche à l'écran. La rotation de la molette provoque en effet l'incrémentation de la valeur de volume affichée et donc sa modification au cours du mouvement de la molette. Une fois que la valeur souhaitée est atteinte, l'utilisateur clique à nouveau sur la molette, ce qui entraîne la sélection de cette valeur et le verrouillage de la pipette avec cette valeur de volume.

### Navigation dans les menus.

Lorsqu'un menu présentant des éléments (par exemple plusieurs actions à accomplir) est affiché sur l'écran, l'utilisateur peut déplacer un curseur de l'un à l'autre des éléments du menu en faisant tourner la molette. L'utilisateur peut sélectionner un élément choisi par un clic sur la molette.

### Entrée de mots, de chiffres et d'expressions.

La molette permet d'entrer dans la pipette des mots (tels que des noms) des nombres, ou encore des expressions alphanumériques mélangeant lettres et chiffres. Ainsi, l'utilisateur est en mesure de personnaliser la pipette en entrant son nom, le nom de son service, ou toute autre information. Les caractères utilisables sont par exemple l'intégralité de l'alphabet de A à Z, les chiffres 0 à 9, « / », l'espace, ou « * ». Le caractère « * » permet par exemple d'indiquer au processeur que le dernier caractère est entré. Chacun des digits est défini successivement. Un caractère est sélectionné pour chaque digit par rotation de la molette, ce qui fait défiler des caractères, des chiffres, ou d'autres signes sur l'écran, puis est validé par un clic. Cela engendre également l'activation du digit suivant pour l'insertion d'un nouveau caractère.

### Réglage du nombre de cycles avant maintenance.

Lorsque ce mode est activé, une valeur de nombre de cycles s'affiche sur l'écran. L'utilisateur fait tourner la molette pour définir le nombre de cycles de prélèvement avant la prochaine opération de maintenance. Lorsque la valeur souhaitée est affichée, l'utilisateur clique pour la sélectionner. Lorsque le nombre de cycles ainsi défini aura été effectué avec la pipette, le processeur déclenchera l'apparition d'un écran prédéterminé indiquant qu'une maintenance doit avoir lieu. De même, l'utilisateur peut de la même façon régler un nombre de semaines jusqu'à la prochaine maintenance lorsqu'il est dans le mode le permettant. Lorsque le nombre de semaines ainsi défini sera atteint, le processeur déclenchera l'affichage d'un message prédéterminé sur l'écran.

### Réglage de la date de maintenance.

La molette permet également de la même façon de régler et de valider la date de la prochaine maintenance en faisant défiler des dates sur l'écran et en sélectionnant la date souhaitée. Une fois arrivée la date sélectionnée, le processeur déclenchera l'affichage d'un message prédéterminé sur l'écran. Lorsqu'un tel message d'alarme est affiché, un clic sur la molette permettra de supprimer l'affichage de ce message.

### Calibration.

La molette permet d'effectuer une calibration personnalisée de la pipette. On suppose par exemple que l'utilisateur a réglé la pipette au volume de prélèvement minimum. Il effectue un prélèvement avec ce volume et mesure le volume qui a été effectivement prélevé à cette occasion. Il est possible que ce volume soit légèrement différent du volume nominal qui avait été programmé. Le processeur est programmé pour tenir compte de ce décalage dans l'affichage d'un volume courant à prélever. Pour entrer la valeur mesurée, l'utilisateur, dans le mode de calibration, déverrouille le réglage de la valeur par un clic sur la molette, fait tourner la molette pour obtenir l'affichage de la valeur correspondant au volume effectivement mesuré, puis verrouille cette valeur de volume par un nouveau clic sur la molette.

Les mêmes opérations peuvent être effectuées par exemple avec la mesure du volume effectivement prélevé lorsque le volume de prélèvement correspond à 50% de la capacité de la pipette. De même, les mêmes opérations seront également effectuées lorsque le volume maximum a été programmé. La connaissance de ces trois paires de valeur permet au processeur de calculer une table ou une courbe de correspondance entre une valeur de volume nominal quelconque et la valeur de volume corrigée à afficher sur l'écran. Cette correction est transparente pour l'utilisateur qui croit seulement sélectionner à l'écran une valeur de volume. En fait, chaque position de la molette génère une valeur nominale qui est corrigée comme précité. C'est la valeur corrigée qui est affichée.

Un autre mode de calibration est envisageable qui est plus rapide que la calibration standard qui vient d'être décrite. Ainsi, pour une valeur de volume quelconque, par exemple un volume fréquemment utilisé par l'utilisateur, l'utilisateur choisit tout d'abord le volume sur lequel il souhaite faire cette calibration. Pour cela, il clique sur la molette pour déverrouiller le réglage de la valeur lorsqu'il est dans le mode correspondant, règle la valeur par rotation de la molette et en suivant l'évolution de la valeur sur l'écran, puis il verrouille le volume ainsi sélectionné par un clic sur la molette. Dans une deuxième étape, l'utilisateur, après avoir effectué un prélèvement avec la pipette, mesure le volume effectivement prélevé. Dans le mode correspondant, il entre dans la pipette la valeur ainsi mesurée. Pour cela, il clique sur la molette pour déverrouiller le réglage de la valeur, règle la valeur par rotation de la molette, puis verrouille la valeur ainsi réglée par un clic sur la molette. Le processeur est programmé pour tenir compte du décalage entre ces deux valeurs en établissant un correctif ou une table de correspondance lors de l'affichage d'une autre valeur de volume quelconque.

### Activation du générateur de sons.

La pipette peut être programmée pour émettre un signal sonore à chaque action sur un organe de commande. L'utilisateur peut choisir de supprimer ce signal. Pour cela, dans le menu correspondant, il clique sur la molette pour déverrouiller le réglage de cette fonction, fait tourner la molette pour choisir l'élément « activé » ou « désactivé » et verrouille à nouveau la pipette par un clic sur la molette.

### Réglage du contraste.

Le contraste de l'écran peut être réglé au moyen de la molette dans le mode correspondant par déverrouillage au moyen d'un clic, sélection de valeur par rotation de la molette, et verrouillage par un nouveau clic.

### Réglage d'un volume limite.

Cette fonction est utile lorsqu'on utilise avec la pipette des cônes de volume inférieur au volume maximal de la pipette. Il est en effet dans ce cas nécessaire de prévoir une limite de volume inférieure à la limite nominale de la pipette. Le réglage du volume à prélever devra en effet être compris entre le volume minimum et le volume limite. Le réglage se fait une fois que l'on se trouve dans le mode correspondant par un clic sur la molette pour déverrouiller le réglage, le réglage de la valeur par rotation de la molette, puis le verrouillage de la valeur réglée par un clic sur la molette.

### Validation des choix.

Après le réglage de certaines valeurs (par exemple les volumes de calibration standard, les volumes de calibration en un point, ou les paramètres de programmation de la maintenance), le processeur attend de l'utilisateur qu'il lui indique si ces réglages doivent être confirmés. Pour cela, l'utilisateur fait tourner la molette pour sélectionner dans le menu correspondant la fonction « quitter », un nouveau menu apparaît pour confirmer par « oui » ou par « non » ces choix. L'un de ces deux éléments est sélectionné au moyen de la molette puis est validé par un clic sur la molette.

Lorsque le message informant l'utilisateur qu'il faut accomplir une maintenance apparaît, l'utilisateur peut choisir d'entrer dans le menu de maintenance pour effectuer cette maintenance ou que cette maintenance lui soit rappelée plus tard. Un clic sur la molette permet d'obtenir un menu de sélection de l'une des deux solutions. La rotation de la molette permet de sélectionner l'une des solutions et un nouveau clic permet de valider cette sélection.

### Mode prélèvement et mélange.

Dans le mode prélèvement et mélange, deux volumes de prélèvement sont à régler. Le premier est le volume à prélever, et le second est le volume de mélange. Les deux volumes peuvent être réglés dans le menu adapté au moyen de la molette, de la même façon qu'on l'a décrit pour le réglage d'un simple volume à prélever.

La pipette pourra être programmée de sorte que dans un mode fonctionnement, un prélèvement de liquide est simplement déclenché par l'action de l'utilisateur sur l'un des boutons et se poursuit lorsque ce bouton est relâché. A l'inverse, la pipette peut être programmée de sorte que dans un mode d'utilisation le prélèvement est intégralement commandé par l'action du bouton, de sorte qu'il se poursuit tant que ce bouton est actionné, et cesse dès que le bouton est relâché par l'utilisateur.

Dans un mode de fonctionnement répétitif, le volume à prélever est réglé de la même manière que ci-dessus. Le nombre d'aliquotes est réglé également avec la molette. Après réglage du volume à prélever, c'est le nombre maximum d'aliquotes qui est affiché. Ce nombre peut être réduit par rotation de la molette puis validé par un clic.

Comme on le voit, la molette permet la sélection et le réglage de différentes fonctions de la pipette en permettant notamment par un clic une commande de sélection et par une rotation dans un premier sens une incrémentation d'une valeur d'un paramètre, et sa décrémentation par une rotation dans le sens opposé. Du point de vue de l'utilisateur, cette molette permet la navigation dans des menus ou le réglage de paramètres. La molette permet de minimiser le nombre de boutons présents sur la pipette. Elle améliore l'ergonomie de la pipette et la rapidité d'utilisation.

On a illustré à la figure 10 une variante de réalisation de la pipette selon l'invention constituée en l'espèce par une pipette 102 motorisée multicanaux. La pipette comprend ici douze canaux 90 permettant d'effectuer douze prélèvements simultanés. La partie haute de la pipette est identique à celle de la pipette de la figure 1, seule est modifiée la partie basse. Il peut s'agir de la partie haute de la figure 1 à laquelle on a fixé de façon amovible la partie basse multicanaux en remplacement de la partie basse monocanal de la figure 1.

Bien entendu, on pourra apporter à l'invention de nombreuses modifications sans sortir du cadre de celle-ci. L'invention a été décrite en référence à une pipette motorisée, c'est-à-dire une pipette dans laquelle le prélèvement est commandé par un moteur. L'invention peut néanmoins être mise en oeuvre avec une pipette dans laquelle le prélèvement est commandé directement par la main de l'utilisateur, et ce mécaniquement, sans l'intervention d'un moteur.

On pourra remplacer la molette mobile en rotation autour d'un axe par une boule mobile en rotation autour d'une infinité d'axes s'étendant dans un plan perpendiculaire à l'axe 82. La boule demeurera mobile à coulissement suivant la direction 82.

Comme on l'a vu, la pipette comprend des moyens pour déterminer une vitesse de rotation de la roue, et des moyens pour choisir une correspondance entre un secteur angulaire de la roue et une unité de valeur d'un paramètre dont le réglage s'effectue au moyen de cette roue. On pourra prévoir de mettre en oeuvre cette caractéristique indépendamment du fait que la roue est montée coulissante.

Par ailleurs, on a décrit le programme enregistré dans la pipette en présentant les actions que devaient effectuer l'utilisateur pour commander la pipette. On pourra mettre en oeuvre le programme correspondant indépendamment de la présence de la molette.

## Revendications

1. Pipette comportant une roue de commande (60) mobile à rotation et mobile à coulissement, **caractérisée en ce qu**'elle est agencée de sorte qu'elle peut être commandée d'une part par un clic en engendrant le coulissement de la roue (60), et d'autre part par une mise en rotation de la roue (60) antérieure ou postérieure au clic.

2. Pipette selon la revendication précédente, **caractérisée en ce que** la roue (60) est mobile à coulissement suivant une direction (82) perpendiculaire à un axe (80) de rotation de la roue.

3. Pipette selon l'une quelconque des revendications précédentes, **caractérisée en ce que** la roue (60) s'étend en saillie d'un corps (4) de la pipette.

4. Pipette selon l'une quelconque des revendications précédentes, **caractérisée en ce que** la pipette comprend des moyens (90) de rappel de la roue à l'encontre de son coulissement à partir d'une position minimale.

5. Pipette selon l'une quelconque des revendications précédentes, **caractérisée en ce qu**'elle comprend des moyens (76, 78) pour convertir un mouvement de la roue (60) en au moins un signal électrique.

6. Pipette selon l'une quelconque des revendications précédentes, **caractérisée en ce qu**'elle comprend des moyens (76, 78) pour convertir un mouvement de la roue (60) en au moins deux signaux électriques permettant de déterminer un sens du mouvement.

7. Pipette selon l'une quelconque des revendications précédentes, **caractérisée en ce qu**'elle est agencée pour permettre une navigation au moyen de la roue (60) dans au moins un menu.

8. Pipette selon l'une quelconque des revendications précédentes, **caractérisée en ce qu**'elle est agencée pour permettre de régler au moyen de la roue (60) au moins un paramètre, et de préférence au moins deux paramètres.

9. Pipette selon l'une quelconque des revendications précédentes, **caractérisée en ce qu'**elle comprend des moyens (50) pour déterminer une vitesse de rotation de la roue et des moyens (50) pour choisir une correspondance entre un secteur angulaire de la roue (60) et une unité de valeur d'un paramètre.

10. Pipette selon l'une quelconque des revendications précédentes, **caractérisée en ce qu'**elle est agencée pour permettre de régler au moyen de la roue au moins un volume à prélever.

11. Pipette selon l'une quelconque des revendications précédentes, **caractérisée en ce qu'**elle est agencée pour permettre de régler au moyen de la roue au moins une valeur de calibration de la pipette.

12. Pipette selon l'une quelconque des revendications précédentes, **caractérisée en ce qu**'elle est agencée pour permettre de régler au moyen de la rue un nombre de cycles de prélèvement précédant l'émission d'un signal par la pipette.

13. Pipette selon l'une quelconque des revendications précédentes, **caractérisée en ce qu'**elle est agencée pour permettre d'enter dans la pipette au moyen de la roue des mots, des chiffres, ou des expressions alphanumériques.

14. Procédé de commande d'une pipette, **caractérisé en ce qu**'on commande la pipette d'une part par un clic en engendrant le coulissement d'une roue (60), et d'autre part par une mise en rotation de la roue (60) antérieure ou postérieure au clic.

15. Procédé selon la revendication précédente, **caractérisé en ce qu**'on fait coulisser la roue pour activer un mode de réglage d'un paramètre.

16. Procédé selon l'une quelconque des revendications 14 à 15, **caractérisé en ce qu**'on fait tourner la roue pour sélectionner une valeur d'un paramètre.

17. Procédé selon l'une quelconque des revendications 14 à 16, **caractérisé en ce qu'**on fait coulisser la roue pour valider une valeur d'un paramètre sélectionné.

18. Procédé selon l'une quelconue des revendications 14 à 17, **caractérisé en ce que :**
- durant une manoeuvre de la roue (60), on détermine une vitesse de rotation de la roue ; et
- on choisit une correspondance entre un secteur angulaire de la roue et une unité de valeur du paramètre.

## Claims

1. Pipette containing a control wheel (60), movable in rotation and slidingly movable, **characterised in that** it is configured so as to be controlled by clicking that causes the wheel (60) to slide on one hand, and by rotating the wheel (60) before or after the click on the other hand.

2. Pipette according to the previous claim, **characterised in that** the wheel (60) is slidingly movable in a direction (82) perpendicular to an axis (80) of rotation of the wheel.

3. Pipette according to either of the previous claims, **characterised in that** the wheel (60) extends beyond the body (4) of the pipette.

4. Pipette according to any of the previous claims, **characterised in that** the pipette contains means (90) for bringing back the wheel in a direction opposite to its sliding, from a minimum position.

5. Pipette according to any of the previous claims, **characterised in that** it contains means (76, 78) for converting the movement of the wheel (60) into at least one electrical signal.

6. Pipette according to any of the previous claims, **characterised in that** it contains means (76, 78) for converting the movement of the wheel (60) into at least two electrical signals that allow a direction of movement to be determined.

7. Pipette according to any of the previous claims, **characterised in that** it is configured so as to allow navigation by means of the wheel (60) in at least one menu.

8. Pipette according to any of the previous claims, **characterised in that** it is configured to regulate at least one parameter, and preferably at least two parameters, by means of the wheel (60).

9. Pipette according to any of the previous claims, **characterised in that** it contains means (50) for determining the speed of rotation of the wheel and devices (50) for choosing a correlation between an angular sector of the wheel (60) and a unit of value for a parameter.

10. Pipette according to any of the previous claims, **characterised in that** it is configured to regulate at least one volume to be sampled, by means of the wheel.

11. Pipette according to any of the previous claims, **characterised in that** it is configured to allow at least one calibration value for the pipette to be regulated by means of the wheel.

12. Pipette according to any of the previous claims, **characterised in that** it is configured to allow a number of sampling cycles to be regulated by means of the wheel before the pipette issues a signal.

13. Pipette according to any of the previous claims, **characterised in that** it is configured to allow the input of words, figures or alphanumeric expressions into the pipette by means of the wheel.

14. Method of controlling a pipette, **characterised in that** the pipette is controlled on one hand by triggering the sliding of a wheel (60) and on the other hand by rotating the wheel (60) before or after the click.

15. Method according to the previous claim, **characterised in that** the wheel is made to slide in order to activate a parameter regulation mode.

16. Method according to either of claims 14 or 15, **characterised in that** the wheel is rotated to select a parameter value.

17. Method according to any of claims 14 to 16, **characterised in that** the wheel is made to slide in order to validate a value for a selected parameter.

18. Method according to any of claims 14 to 17, **characterised in that**:
- while the wheel (60) is being manoeuvred, the speed of rotation of the wheel is determined; and
- a correlation between an angular sector of the wheel and a unit of value for the parameter is chosen.

## Patentansprüche

1. Pipette, umfassend ein drehbewegliches und verschiebungsbewegliches Steuerrad (60), **dadurch gekennzeichnet, dass** sie derart gestaltet ist, dass sie einerseits durch ein Klicken unter Erzeugung der Verschiebung des Rads (60) gesteuert werden kann, und andererseits durch ein In-Drehung-Versetzen des Rads (60) vor oder nach dem Klicken.

2. Pipette nach dem vorhergehenden Anspruch, **dadurch gekennzeichnet, dass** das Rad (60) in einer Richtung (82) verschiebungsbeweglich ist, welche orthogonal zu einer Drehachse (80) des Rads ist.

3. Pipette nach einem der vorhergehenden Ansprüche, **dadurch gekennzeichnet, dass** sich das Rad (60) aus einem Gehäuse (4) der Pipette vorstehend erstreckt.

4. Pipette nach einem der vorhergehenden Ansprüche, **dadurch gekennzeichnet, dass** die Pipette Mittel (90) zum Rückstellen des Rads entgegen seiner Verschiebung ausgehend von einer Minimalposition umfaßt.

5. Pipette nach einem der vorhergehenden Ansprüche, **dadurch gekennzeichnet, dass** sie Mittel (76, 78) zum Umwandeln einer Bewegung des Rads (60) in wenigstens ein elektrisches Signal umfaßt.

6. Pipette nach einem der vorhergehenden Ansprüche, **dadurch gekennzeichnet, dass** sie Mittel (76, 78) zum Umwandeln einer Bewegung des Rads (60) in wenigstens zwei elektrische Signale umfaßt, die die Bestimmung einer Bewegungsrichtung erlauben.

7. Pipette nach einem der vorhergehenden Ansprüche, **dadurch gekennzeichnet, dass** sie dazu ausgelegt ist, eine Navigation mit Hilfe des Rads (60) in wenigstens einem Menü zu ermöglichen.

8. Pipette nach einem der vorhergehenden Ansprüche, **dadurch gekennzeichnet, dass** sie dazu ausgelegt ist, mit Hilfe des Rads (60) wenigstens einen Parameter zu regeln, und vorzugsweise mindestens zwei Parameter.

9. Pipette nach einem der vorhergehenden Ansprüche, **dadurch gekennzeichnet, dass** sie Mittel (50) zur Bestimmung einer Drehgeschwindigkeit des Rads umfaßt, sowie Mittel (50) zum Auswählen einer Entsprechung zwischen einem Winkelsektor des Rads (60) und einer Einheit des Werts eines Parameters.

10. Pipette nach einem der vorhergehenden Ansprüche, **dadurch gekennzeichnet, dass** sie dazu ausgelegt ist, die Regelung wenigstens eines zu entnehmenden Volumens mit Hilfe des Rads zu ermöglichen.

11. Pipette nach einem der vorhergehenden Ansprüche, **dadurch gekennzeichnet, dass** sie dazu ausgelegt ist, die Regelung mindestens eines Kalibrierungswerts der Pipette mit Hilfe des Rads zu ermöglichen.

12. Pipette nach einem der vorhergehenden Ansprüche, **dadurch gekennzeichnet, dass** sie dazu ausgelegt ist, mit Hilfe des Rads die Regelung einer Zahl von Entnahmezyklen vor der Aussendung eines Signals durch die Pipette zu regeln.

13. Pipette nach einem der vorhergehenden Ansprüche, **dadurch gekennzeichnet, dass** sie dazu ausgelegt ist, mit Hilfe des Rads die Eingabe von Wörtern, von Ziffern oder von alphanumerischen Ausdrücken in die Pipette zu ermöglichen.

14. Verfahren zur Steuerung einer Pipette, **dadurch gekennzeichnet, dass** man die Pipette einerseits mittels eines Klickens unter Erzeugung der Verschiebung eines Rads (60) steuert, und andererseits durch ein In-Drehung-Versetzen des Rads (60) vor oder nach dem Klicken.

15. Verfahren nach dem vorhergehenden Anspruch, **dadurch gekennzeichnet, dass** man die Verschiebung des Rads bewirkt, um einen Modus zur Regelung eines Parameters zu aktivieren.

16. Verfahren nach einem der Ansprüche 14 bis 15, **dadurch gekennzeichnet, dass** man eine Drehung des Rads bewirkt, um einen Wert eines Parameters auszuwählen.

17. Verfahren nach einem der Ansprüche 14 bis 16, **dadurch gekennzeichnet, dass** man eine Verschiebung des Rads bewirkt, um einen Wert eines ausgewählten Parameters zu bestätigen.

18. Verfahren nach einem der Ansprüche 14 bis 17, **dadurch gekennzeichnet, dass**:
- man während einer Betätigung des Rads (60) eine Drehgeschwindigkeit des Rads bestimmt; und
- man eine Entsprechung zwischen einem Winkelsektor des Rads und einer Einheit des Werts des Parameters wählt.
